# EUROPÄISCHE PATENTSCHRIFT

(11) **EP 2 739 189 B1**
(45) Veröffentlichungstag und Bekanntmachung des Hinweises auf die Patenterteilung: **03.07.2019**
(21) Anmeldenummer: 11743049.6
(22) Anmeldetag: 05.08.2011
(51) Int. Cl.: A47J 43/07

(54) **MESSEREINHEIT SOWIE STANDMIXER**
BLADE UNIT AND BLENDER
UNITÉ DE COUTEAUX ET MIXEUR SUR PIED

(43) Veröffentlichungstag der Anmeldung: 11.06.2014
(73) Patentinhaber: Obschestvo S Ogranichennoy Otvetstvennostyu "Bork Import", Moscow (RU)
(72) Erfinder: SCHÖNENBERGER, Stefan, CH-8340 Hinwil (CH); RUBIN, Andres, CH-8608 Bubikon (CH); TANNER, Pascal, CH-8716 Schmerikon (CH); SCACCHI, Tino, CH-8340 Hinwil (CH)
(74) Vertreter: Hepp Wenger Ryffel AG
(86) Internationale Anmeldenummer: PCT/EP2011/063500
(87) Internationale Veröffentlichungsnummer: WO 2013/020570

(56) Entgegenhaltungen:
- WO-A1-2010/099721
- WO-A1-2010/099721
- CN-Y- 201 404 117
- CN-Y- 201 404 117
- GB-A- 747 764
- US-A1- 2003 214 877
- US-A1- 2003 214 877
- US-A1- 2005 099 884
- US-A1- 2005 099 884

## Beschreibung

Die Erfindung betrifft eine Messereinheit für einen Mixer sowie einen Standmixer zum Vermengen und/oder Zerkleinern von Lebensmitteln gemäss den Oberbegriffen der unabhängigen Ansprüche.

Standmixer zum Vermengen von Lebensmitteln sind bekannt. Bei gröberem Mixgut tritt bisher das Problem der unzureichenden Vermengung und daraus resultierend ungleichmässige Zerkleinerung des Mixguts auf. Weiterhin ist die Reinigung eines Standmixers aufgrund seiner Bauhöhe und auch seiner elektrischen Teile nicht ganz unkompliziert.

Das Dokument US 2,750,162 offenbart einen Mixer mit einer herausnehmbaren Messereinheit. Zum Verschliessen der Öffnung für die Messereinheit wird eine Dichtung von der Messereinheit von oben auf eine Dichtlippe des Behälters aufgepresst. Der Ein- und Ausbau der Messereinheit ist schwierig, da der Durchmesser der Platte, die die Dichtung auf den Behälter aufdrückt, grösser ist, als die Öffnung im Behälter.

Aus EP 1 112 013 A1 ist ebenfalls eine entfernbare Messervorrichtung für einen Mixer bekannt. Die Fixierung der Messervorrichtung erfolgt durch einen Verriegelungsmechanismus, der quer zur Messerwelle angeordnet ist. Ein solcher Mechanismus ist kompliziert in der Montage und aufwändig zu reinigen.

Das Dokument EP 0 724 857 A1 offenbart ein rotierendes Schneidmesser. Durch seine Form ist das Messer geeignet, Mixgut zu zerkleinern, die Vermischung während dem Mixvorgang ist nicht optimal, so dass keine gleichmässige Zerkleinerung erfolgt.

Aus der US 6,550,703 B ist ein Messer für einen Mixer bekannt. Das Messer weist mehrere Schnittebenen auf. Das Messer weist ein Gefälle von der Schneidkante zur Folgekante auf. Es entstehen nur Verwirbelungen im Bereich der Messer. Die Vermischung des gesamten Mixguts ist jedoch nicht optimal.

Die US 2005/099884 A1 offenbart einen Behälter mit Messereinheit für einen Standmixer, wobei die Messer schnell im Behälter montierbar sind.

Es ist die Aufgabe der Erfindung, die Nachteile des Standes der Technik zu vermeiden und insbesondere einen Standmixer und eine Messereinheit zu schaffen, die eine gute Vermengung des Mixguts, eine leichte Handhabung sowie gute Reinigungsmöglichkeiten ermöglichen.

Die Aufgabe wird durch eine Messereinheit gemäss Anspruch 1 und einem Standmixer gemäss Anspruch 5 gelöst. Weitere Ausführungsformen ergeben sich aus den Unteransprüchen.

Ein Messer für einen Mixer kann eine Welle und mehrere Klingen mit je einer Schneidkante umfassen, wobei die Klingen mit der Welle in Wirkverbindung stehen. Die Klingen können in einem Schneidbereich einen flügelprofil-ähnlichen Querschnitt quer zur Schneidkante aufweisen.

Ein flügelprofil-ähnlicher Querschnitt ist hier und im Folgenden dadurch definiert, dass die Klingen im Querschnitt eine obere und eine untere Seite aufweisen. An den Kontaktbereichen von der oberen und der unteren Seite ist in Bewegungsrichtung des Messers vorne eine Schneidkante ausgestaltet, sowie in Bewegungsrichtung des Messers hinten eine Folgekante angeordnet. Eine der beiden Seiten ist kürzer als die andere Seite, so dass im Betrieb ein Bernoullieffekt entsteht. Vorzugsweise ist eine der beiden Seiten dabei im Querschnitt in etwa eine Gerade. Die andere Seite ist bombiert ausgestaltet. Von der Schneidkante aus beträgt der Winkel zwischen oberer und unterer Seite in etwa 30-60°, bevorzugt 40-50° und besonders bevorzugt 44°-46°. Dieser Winkelbereich erstreckt sich ausgehend von der Schneidkante vorzugsweise in etwa über die maximale Profildicke. Der darauf folgende flussoptimierte Bereich der bombierten Seite ist stetig abfallend bis zur Folgekante ausgestaltet. Vorzugsweise weist der flussoptimierte Bereich zumindest teilweise eine konvexe Form auf.

Ein solcher flügelprofil-ähnlicher Querschnitt erzeugt neben der Verwirbelung eine Sogwirkung und führt somit zu einer ausgezeichneten Vermischung des Mixguts. Dabei müssen nicht alle Klingenprofile dieselbe Ausrichtung aufweisen. So hat es sich beispielsweise gezeigt, dass eine Anordnung mit mehreren Klingen und teilweise unterschiedlich ausgerichteten Klingenprofilen eine sehr gute Vermischung des Mixgutes bewirkt. Des Weiteren kann durch eine derartige Kombination der Messer eine Kraft erzeugt werden, die entgegen der Schwerkraft auf das Messer wirkt und somit ein Dichtungsmittel oder ein Befestigungsmittel des Messers im Betrieb entlastet. Dies wirkt sich positiv auf die Lebensdauer des Dichtmittels aus.

Das Messer kann zwei, bevorzugt vier, insbesondere bevorzugt sechs Klingen aufweisen.

Eine symmetrische Anzahl an Klingen erleichtert das Auswuchten. Dabei sind vorzugsweise jeweils zwei Klingen punktsymmetrisch angeordnet. Es ist jedoch auch möglich die Klingen asymmetrische anzuordnen. Eine grössere Anzahl Klingen führt zu einer erhöhten Produktivität des Mixers im Gebrauch, dabei hat es sich gezeigt, dass mit 6 Klingen ein Optimum zwischen Preis und Produktivität erreicht wird.

Wenigstens ein Klingenwinkel zwischen Wellenachse und Schneidkante einer Klinge kann von dem Klingenwinkel der anderen Klingen abweichen.

Durch verschiedene Winkel ergeben sich verschiedene Schnittebenen, so dass das Mixgut effektiver vermischt und zerkleinert wird.

Die Klingen des Messers weisen bevorzugt eine Schneid- und eine Folgekante auf, wobei die Länge der Schneidkante kürzer als die Länge der Folgekante ausgebildet sein kann.

Unter der Länge einer Kante wird selbstverständlich jeweils die geglättete Länge verstanden. Etwaige Verzahnungen oder Riffelungen gehören nicht zur Länge einer Schneidkante oder Folgekante. Beispielsweise kann die Schneidkante in etwa gerade und die Folgekante insbesondere in ihrem Endbereich konvex ausgestaltet sein.

Durch eine längere Folgekante als die Schneidkante wird die Abrisskante optimiert weshalb weniger Verwirbelungen hinter dem Messer auftreten.

Eine erfindungsgemässe Messereinheit zum Einsetzen in einen Körper eines Mixers umfasst ein Messer mit wenigstens einer Klinge und einer Welle, vorzugsweise ein Messer wie vorgängig beschrieben. Die Klingen stehen mit der Welle in Wirkverbindung. Des Weiteren umfasst die Messereinheit ein Gehäuse zum Abdecken der Welle des Messers sowie Dichtmittel zum dichten Verschliessen einer Öffnung des Körpers eines Mixers. Die Messereinheit weist zwei Pressflächen auf, welche gegeneinander verschiebbar sind und das Dichtmittel ist so zwischen diesen Pressflächen angeordnet, dass beim Zusammenpressen der Pressflächen sich das Dichtmittel radial ausdehnt. Durch eine solche radiale Ausdehnung ist ein dichtes Abschliessen in einem hohlzylindrisch ausgeformten Bereich möglich. Eine Abdichtung der Messereinheit in einem Körper eines Mixers durch eine radiale Ausdehnung ermöglicht einen leichten Ein- und Ausbau einer Messereinheit.

Die Pressflächen können hierbei in etwa axial gegeneinander verschiebbar sein.

Unter in etwa axial wird verstanden, dass die Pressflächen zwar gegeneinander verschoben werden können, diese Verschiebung jedoch nicht genau parallel zur Wellenachse erfolgen muss, sondern in einem Winkel von +/- 10° abweichen kann.

Die Pressflächen können in etwa senkrecht zur Wellenachse angeordnet sein.

Unter in etwas senkrecht zur Wellenachse angeordneten Pressflächen werden Pressflächen verstanden, welche in einem Winkel von 90° +/- 10° von der Wellenachse abstehen. Dabei können die Pressflächen als ebene Flächen oder als Konusflächen ausgebildet sein.

Senkrecht zur Welle angeordnete Pressflächen lassen sich leicht axial verschieben. Des Weiteren ist keine komplizierte Mechanik notwendig, sondern die axiale Bewegung der Pressflächen wird direkt in eine radiale Ausdehnung des Dichtmittels umgewandelt. Eine einfache Mechanik erhöht die Haltbarkeit.

Das Dichtmittel ist vorzugsweise elastisch ausgebildet und besteht aus EPDM, CR, NBR, NR, SBR, PU, PVC, FKM oder Silikon. Weiterhin ist auch eine PTFE-Beschichtung des Dichtmittels denkbar.

Das Dichtmittel kann ein einfacher O-Ring sein oder eine komplexe Querschnittsgeometrie aufweisen. Zur Befestigung des Dichtmittels an oder in den Pressflächen kann das Dichtmittel vorstehende Rippen aufweisen. Entsprechend können die Pressflächen so ausgestaltet sein, dass das Dichtmittel an den Rippen gefasst werden kann. Insbesondere kann das Dichtmittel ein U-Profil aufweisen. Vorteilhafterweise können vordefinierte Knick- oder Biegebereiche in dem Dichtmittel eine geringere Materialstärke aufweisen. Des Weiteren kann das Dichtmittel direkt an eine Pressfläche angespritzt sein, so dass eine Pressfläche mit dem Dichtmittel als Zweikomponententeil ausgebildet ist. Durch diese Herstellungsweise wird ein Produktionsschritt weniger benötigt und so die Produktion optimiert. Weiter kann zwischen Dichtung und einem Gehäuseteil (Mantelfläche) eine Trennstelle eliminiert werden. Dies ist für die Reinigung und die Hygiene vorteilhaft. Das Dichtmittel kann auf einer Innenseite eine Kerbe aufweisen. Eine Kerbe auf der Innenseite erleichtert die axiale Ausdehnung, da die Kerbe einen Knickbereich für das Dichtmittel vorgibt. Es wird daher durch die Kerbe einerseits die Richtung der Ausdehnung vorgegeben, andererseits wird auch die Ausdehnungsbewegung erleichtert und mit weniger Kraftaufwand ermöglicht.

Es versteht sich von selbst, dass die Kerbe durchgängig radial umlaufend angeordnet sein oder auch Unterbrechungen aufweisen kann. Des Weiteren kann die Kerbe im Querschnitt unterschiedlich geometrisch ausgestaltet sein, wie beispielsweise vieleckig, halbrund oder oval.

Das Gehäuse ausgehend von der Welle des Messers kann sich radial nach aussen erstrecken. Dabei verläuft eine den Klingen zugeordnete Mantelfläche des Gehäuses so, dass die Mantelfläche einen stetigen Verlauf und eine konkave Krümmung mit einem minimalen Radius von 0.1-10 mal die Länge des Messers, bevorzugt 0.2-5 mal die Länge des Messers und inbesondere bevorzugt 0.3 mal die Länge des Messers aufweist.

Die Länge des Messers ist im Rahmen der Erfindung definiert als der Durchmesser des Kreises, der bei Rotation der längsten Klinge um die Welle entsteht.

Eine konkave Krümmung der Mantelfläche ergibt einen flussoptimierten Verlauf des Bodens unterhalb der Messereinheit und führt zusammen mit der Rotation des Messers und einer entsprechenden Ausgestaltung der Messer zu einer guten Vermischung des Mixguts. Des Weiteren lässt sich eine glatte, konkave Fläche mit einem stetigen Verlauf leicht reinigen, da sich Verschmutzungen nicht absetzen können.

Ein Körper für einen Mixer kann im Wesentlichen hohlzylindrisch ausgestaltet sein und eine obere Öffnung zum Einfüllen eines Mixguts, sowie eine untere Öffnung zur Aufnahme eine Messereinheit aufweisen. Vorzugsweise kann eine Messereinheit wie vorgängig beschrieben aufgenommen werden. Des Weiteren kann der Körper eine Standfläche zum Aufstellen des Körpers auf eine Arbeitsfläche aufweisen. Die untere Öffnung kann durch eine auf der Innenseite des Körpers umlaufende, radial nach innen vorstehende Kontur mit einer Kontaktfläche gebildet sein, an welche ein Dichtmittel einer Messereinheit zum dichten Verschliessen anpressbar ist. Die radial nach innen vorstehende Kontur kann zur Mixgutseite hin einen stetigen Übergang von einer im Wesentlichen vertikal verlaufenden Wand des Körpers in eine in etwa horizontal verlaufende Ebene bis hin zur Kontaktfläche aufweisen. Die Begriffe "vertikal" und "horizontal" beziehen sich auf die Standfläche des Körpers.

Ein solcher Verlauf ermöglicht einen optimalen Fluss des Mixguts im Betrieb und führt so zu einer guten Vermischung. Insbesondere wenn die Messereinheit ebenfalls mit einem konkaven Gehäuse ausgestaltet und der Übergang von der Messereinheit zum Körper stetig ausgebildet ist, wird eine optimale Durchmischung des Mixguts gewährleistet.

Der minimale Radius der radial nach innen vorstehenden Kontur zur Mixgutseite hin kann flussoptimiert ausgestaltet sein.

Eine flussoptimierte Ausgestaltung ermöglicht eine gute Vermischung des Mixguts. Flussoptimiert im Rahmen dieser Anmeldung bedeutet, dass der Übergang von der im Wesentlichen senkrechten Wand des Körpers zum im Wesentlichen horizontalen Verlauf der nach innen vorstehenden Kontur zumindest teilweise über den Umfang so ausgestaltet ist, dass der Übergang stetig ist. Des Weiteren ist die nach innen vorstehende Kontur so ausgestaltet, dass sie auch mit einer einzubauenden Messereinheit zumindest teilweise über den Umfang einen stetigen Übergang bildet. Es versteht sich von selbst, dass dieser stetige Übergang durch Stege unterbrochen sein kann. Insbesondere sind Stege denkbar, die im bestimmungsgemässen Gebrauch vertikal angeordnet sind.

Die Kontaktfläche kann zumindest teilweise in etwa vertikal ausgestaltet sein. Dabei wird unter in etwa vertikal ein Bereich von +/-5° um die Vertikale im bestimmungsgemässen Gebrauch verstanden.

Eine vertikale Kontaktfläche ermöglicht das Anpressen einer Messervorrichtung ohne Abrutschen. Insbesondere für eine Dichtung, die sich radial ausdehnt, ist eine vertikale Kontaktfläche für eine zuverlässige Dichtung vorteilhaft.

Unterhalb der Kontaktfläche, also auf der vom Mixgut abgewandten Seite kann wenigstens ein Einrastmittel zum verdrehsicheren Einrasten einer Messereinheit ausgestaltet sein.

Es versteht sich von selbst, dass entsprechend die Messereinheit ein korrespondierendes Einrastmittel aufweisen muss.

Ein Einrastmittel ermöglicht einerseits eine Rückmeldung an den Anwender, dass die Messereinheit richtig eingerastet ist. Andererseits kann ein Einrastmittel als Verdrehsicherung dienen. Ausserdem dient das Einrastmittel als Gegenlager bei einer Drehbewegung zum Verschliessen des Körpers. Im Betrieb des Mixers wird eine Verdrehsicherung ebenfalls durch die Reibkraft zwischen Messereinheit und Körper des Mixers bzw. zwischen Dichtmittel der Messereinheit und Kontaktfläche des Körpers gewährleistet. Ein Einrastmittel bietet jedoch noch eine zusätzliche mechanische Verdrehsicherung. Das Einrastmittel kann beispielsweise als Einrastnocke ausgebildet sein. Die Einrastnocke selber kann radial und/oder axial angeordnet sein.

Die Kontaktfläche kann eine Anschlagfläche in radialer Richtung aufweisen.

Eine Anschlagfläche ermöglicht zusätzlich zum Reibschluss zwischen Messereinheit und Körper einen Formschluss, was zu einer sichereren Befestigung führt. Weiterhin wird durch eine Anschlagfläche der Kontaktbereich von Kontaktfläche und Dichtmittel vergrössert, was zu einer grösseren Dichtfläche und damit zu einer verbesserten Dichtung führt.

Eine Anschlagfläche braucht für die Erfüllung dieser Funktion eine zumindest teilweise radiale Komponente. Aus diesem Grund werden unter einer Anschlagfläche in radialer Richtung auch eine oder mehrere Nuten in der Kontaktfläche sowie beispielsweise eine konusförmige Kontaktfläche, bei der sich der Radius der Kontaktfläche stetig verringert, verstanden. Bevorzugt verjüngt sich eine konusförmige Kontaktfläche zur Standfläche hin. Andere Ausführungsformen sind ebenfalls denkbar.

Als Standfläche des Körpers ist diejenige Fläche zu verstehen, auf welcher der Körper abgestellt wird. Vorzugsweise ragt bei eingebauter Messereinheit die Messereinheit nicht über die Standfläche hinaus, so dass ein sicherer Stand gewährleistet ist.

Um ein möglichst grosses Volumen für Mixgut zu erzielen, ist daher die Position der radial nach innen vorstehenden Kontur des Körpers der korrespondierenden Messereinheit angepasst, so dass diese im eingebauten Zustand gerade nicht über die Standfläche hinausragt.

Der Körpers besteht vorzugsweise aus Glas, kann aber auch aus Metall oder Kunststoff gefertigt sein. Die Verwendung von Glas als Material hat den Vorteil, dass der Körper vom Nutzer als hochwertig empfunden wird, der Körper spülmaschinenfest ist, das Mixgut sichtbar bleibt und der Körper UV-beständig, temperaturbeständig sowie lebensmittelecht ist.

Der Körper ist im Bereich der radial nach innen vorstehenden Kontur in einer Ebene parallel zur Standfläche in etwa rund ausgestaltet. Im Bereich des Körpers, in den das Mixgut eingefüllt und vermengt wird, ist es vorteilhaft, wenn der Körper eine von der runden Form abweichende Form aufweist, beispielsweise kleeblattförmig ausgestaltet ist. Eine solche nicht runde Form behindert die Mitnahme des Mixguts durch die Messer und führt in der Folge zu einer verbesserten Durchmischung.

Ein Behälter für einen Mixer kann einen Körper und eine Messereinheit umfassen. Der Körper sowie die Messereinheit können vorzugsweise wie vorgängig beschrieben ausgestaltet sein. Der Körper kann auf der Innenseite eine umlaufende Kontur mit einer Kontaktfläche für ein Dichtmittel aufweisen. Die Messereinheit kann entsprechend ein umlaufendes Dichtmittel aufweisen. Die Messereinheit kann zwei Pressflächen aufweisen, welche gegeneinander verschiebbar sind und das Dichtmittel kann so zwischen den Pressflächen angeordnet sein, dass sich beim Zusammenpressen der Pressflächen das Dichtmittel radial ausdehnt. Durch dieses radiale Ausdehnen des Dichtmittels ist die Messereinheit an der Kontaktfläche im Körper verriegelbar.

Ein solcher Behälter ist leicht montierbar sowie demontierbar und lässt sich entsprechend leicht und gründlich reinigen. Der Körper und die Messereinheit können einzeln, beispielsweise in einer Spülmaschine, gereinigt werden.

Die Messereinheit weist ein Gehäuse auf, wobei die Kontur des Gehäuses der Messereinheit so ausgebildet sein kann, dass sie einen stetigen Übergang mit der Kontur des Körpers des Behälters bildet.

Das Gehäuse der Messereinheit bildet den Abschluss der Messereinheit zum Mixgut hin. Ein stetiger Übergang mit der Kontur des Körpers führt zu einem guten Fluss des Mixgutes im Betrieb und damit zu einer optimalen Vermischung. Das Mixgut fliesst hierbei vom Messer aus nach unten zum Gehäuse der Messereinheit hin, wird vom Gehäuse radial nach aussen abgelenkt und durch die Kontur des Körpers in axialer Richtung nach oben gelenkt, von wo das Mixgut wieder zurück in den Messerbereich fliesst.

Eine Antriebseinheit für einen Standmixer kann einen Antrieb, ein Schaltelement zumindest zum Ein- und Ausschalten des Antriebs, Kupplungsmittel mit einer Welle zum Ankuppeln an eine Messereinheit eines Behälters sowie ein Gehäuse mit einer Gehäuseoberfläche umfassen. Die Welle kann mit einem Antrieb wirkverbunden sein. Die Gehäuseoberfläche kann im Wesentlichen senkrecht zur Welle verlaufen und in etwa flach ausgestaltet sein, und kann insbesondere keine Vertiefungen, Nuten, etc. aufwiesen. Kleinere Designvertiefungen oder leichte Vertiefungen zum definierten Sammeln von Restflüssigkeiten sind natürlich denkbar.

Unter im Wesentlichen senkrecht zur Welle wird ein Winkel von 90°+/-5° zur Wellenachse verstanden. In etwa flach bedeutet insbesondere, dass keine Verriegelungsmechanismen auf der Gehäuseoberfläche angeordnet sind. Die Gehäuseoberfläche kann leicht gewellt ausgestaltet sein und/oder einen Rand aufweisen. Es sind jedoch keine schwer zu reinigenden Ecken, Kanten, Hinterschneidungen oder Spalten auf der Gehäuseoberfläche angeordnet.

Eine ebene Gehäuseoberfläche lässt sich leicht reinigen. Insbesondere kann sich kein Schmutz oder verschüttetes Mixgut in Vertiefungen/Nuten festsetzen.

Die Gehäuseoberfläche kann eine Standfläche aufweisen, deren Form und Grösse einer Standfläche eines entsprechenden Behälters entspricht.

Eine definierte Standfläche, die an die Form und Grösse des Behälters angepasst ist, ermöglicht das Anpassen beispielsweise des Materials der Standfläche an das Material des Behälters und führt somit zu einem sicheren Stand. Insbesondere kann somit eine Materialkombination gewählt werden, welche ein sanftes Aufsetzen und eine erhöhte Reibung gewährleistet. Wenn die Standfläche zusätzlich noch optisch erkennbar, beispielsweise durch eine andere Farbgebung, ausgestaltet ist, wird für den Anwender das Aufsetzen des Behälters in der korrekten Position erleichtert.

Die Gehäuseoberfläche kann eine Nut zur Aufnahme eines Einlegeelements aufweisen.

Eine Nut in der Gehäuseoberfläche ermöglicht ein schnelles und einfaches Montieren einer Standfläche für einen Behälter. Durch die Ausgestaltung einer Nut wird eine flache Gestaltung der Gehäuseoberfläche in Verbindung mit einer auf den Behälter abgestimmten Materialwahl für die Standfläche ermöglicht.
Das Einlegeelement kann mehrere Komponenten aufweisen.

Die Standfläche kann mindestens in einem Teilbereich im Querschnitt mehrschichtig ausgestaltet sein.

Eine mehrschichtige Gestaltung ermöglicht die Anpassung der Standfläche an verschiedene Herausforderungen, wie beispielsweise eine hohe Festigkeit, um dem Behälter eine sichere Standfläche zu bieten und/oder auch dämpfende Eigenschaften und/oder reibungserhöhende Eigenschaften verglichen mit der übrigen Gehäuseoberfläche.

Ein Einlegeelement hat insbesondere produktionstechnische Vorteile, da die Montage einfach und schnell ist. Durch eine geeignete Ausgestaltung, beispielsweise mit Schnappern, kann das Einlegeteil werkzeugfrei montiert werden. Des Weiteren kann die Herstellung von Gehäuse und Einlegeteil unabhängig voneinander erfolgen. Es ist auch möglich das Einlegeteil auf den entsprechend aufzunehmenden Behälter anzupassen, indem beispielsweise der Reibungskoeffizient der Materialien abgestimmt werden kann.

Die Standfläche kann durch ein Einlegeelement gebildet sein.

Das Einlegeelement ist vorzugsweise mehrschichtig ausgestaltet. Es kann eine Hart- und eine Weichkomponente aufweisen. Zumindest im Kontaktbereich zum Behälter kann eine Weichkomponente angeordnet sein. Hartkomponenten sind beispielsweise PC, PA, POM, ABS, PE, PVC oder PP, während als Weichkomponenten TPE, TPU oder Silikon sowie Gummimaterialien bevorzugt sind. Vorteilhaft wird das Einlegeelement im Zweikomponentenspritzguss hergestellt.

Die Standfläche kann wenigstens ein Sicherheitselement zur Detektion der Anwesenheit eines Behälters aufweisen.

Ein solches Sicherheitselement kann beispielsweise die Übertragung eines Drehmoments von einem Antrieb auf ein Messer nur dann ermöglichen, wenn auch ein Behälter auf die Antriebseinheit aufgesetzt ist. Es versteht sich von selbst, dass auch der Betrieb des Antriebs durch die Sicherheitselemente gesteuert werden kann, indem die Antriebseinheit nur dann gestartet werden kann, wenn ein Behälter auf die Antriebseinheit aufgesetzt ist. Ein Kontakt eines Anwenders mit drehenden Teilen kann somit ausgeschlossen werden. Es versteht sich von selbst, dass mehrere Sicherheitselemente verwendet werden können, welche zusammen die Übertragung eines Drehmoments freigeben.

Das Sicherheitselement kann einen Mikroschalter umfassen.

Mikroschalter haben eine lange elektrische und mechanische Lebensdauer und ermöglichen eine präzise Schaltung. Insbesondere weisen Mikroschalter einen kurzen Schaltweg und kleine Dimensionen auf.

Derartige Mikroschalter sind beispielsweise in eine Schalteraufnahme eingelegt. Die Schalteraufnahme ist im Gehäuse der Antriebseinheit befestigt, beispielsweise durch Einclipsen und/oder Verrasten.

Die Standfläche kann im Bereich des Sicherheitselements eine vorstehende Noppe aufweisen.

Es ist vorteilhaft, dass das Sicherheitselement abgedeckt ist, um die Reinigung zu erleichtern. Um trotz der Abdeckung das Auslösen des Sicherheitselements beim Aufstellen des Behälters zu ermöglichen ist der Einsatz einer Noppe vorteilhaft. Diese Noppe ist im Ruhezustand von der Standfläche vorstehend ausgebildet. Ausserdem ist sie elastisch ausgestaltet und wird durch das Aufsetzen des Behälters eingedrückt, so dass ein darunter liegendes Sicherheitselement betätigt wird. Vorzugsweise wird die Noppe durch das Material der Weichkomponente des Einlegeelements gebildet, während die Hartkomponente des Einlegeelements im Bereich der Noppe eine Aussparung aufweist, in welcher das Sicherheitselement angeordnet werden kann.

Die Noppe kann im Querschnitt unterschiedliche Materialdicken aufweisen, insbesondere kann die Noppe in ihrem Scheitelbereich eine grössere Materialstärke als im Randbereich aufweisen.

Durch einen definierten dünneren Randbereich wird ein Bereich erzeugt, an dem die Noppe leichter knickt und das Material weniger verformt wird. Durch eine solche Ausgestaltung wird die Dauerhaftigkeit erhöht. Die Noppe kann selbstverständlich verschiedene Formen aufweisen, sie kann kreisförmig, oval oder auch eckig ausgestaltet sein. Durch einen dickeren Scheitelbereich wird sichergestellt, dass beim Aufsetzen eines Behälters die Noppe eingedrückt und ein darunterliegendes Sicherheitselement ausgelöst wird. Ein dickerer Scheitelbereich bedeutet in diesem Zusammenhang, dass die Materialstärke im Scheitelbereich der Noppe, grösser ist als die Materialstärke im Randbereich der Noppe.

Ein erfindungsgemässer Standmixer umfasst wenigstens eines der folgenden Merkmale:
ein Messer wie vorgängig beschrieben.

Ein solcher Standmixer ermöglicht eine gute Durchmischung des Mixguts und/oder eine komfortable Handhabung für den Nutzer. Die Erfindung ist im Folgenden anhand von Figuren näher erläutert. Dabei zeigt:
- Figur 1:: eine Seitenansicht eines Messers mit 6 Klingen,
- Figur 2:: eine Draufsicht auf das Messer gemäss Figur 1, wobei nur 2 Klingen dargestellt sind,
- Figur 3:: einen Querschnitt durch eine Klinge eines Messers,
- Figur 4:: eine Ansicht einer erfindungemässen Messereinheit,
- Figur 5:: einen Querschnitt durch einen Körper,
- Figur 6:: ein Querschnitt durch einen Behälter,
- Figur 7:: eine Ansicht einer Antriebseinheit,
- Figur 8:: eine perspektivische Ansicht der Antriebseinheit gemäss Figur 7,
- Figur 9:: eine perspektivische Ansicht eines erfindungsgemässen Standmixers,
- Figur 10:: eine Explosionszeichnung einer erfindungsgemässen Messereinheit.

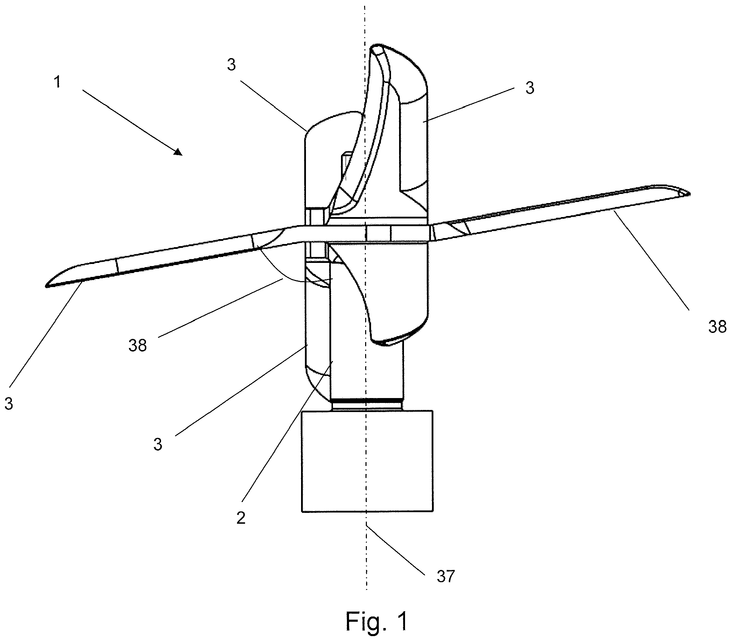

Figur 1 zeigt eine Seitenansicht eines Messers 1 mit einer Welle 2 und sechs Klingen 3. Jede der Klingen 3 weist eine Schneidkante 4 auf. Über die Welle 2 wird ein Drehmoment auf das Messer 1 übertragen und das Messer 1 somit in Rotation um eine Wellenachse 37 versetzt. Die Schneidkanten 4 der einzelnen Klingen 3 sind zueinander punktsymmetrisch ausgestaltet. Zwischen der Wellenachse 37 und den Schneidkanten 4 ist je ein Klingenwinkel 38 angeordnet. Der Klingenwinkel 38 ist bei allen sechs Klingen 3 unterschiedlich. Die einzelnen Klingenwinkel 38 betragen 80°, 100°, 50°, 67.5°, 130° und 157.5°.

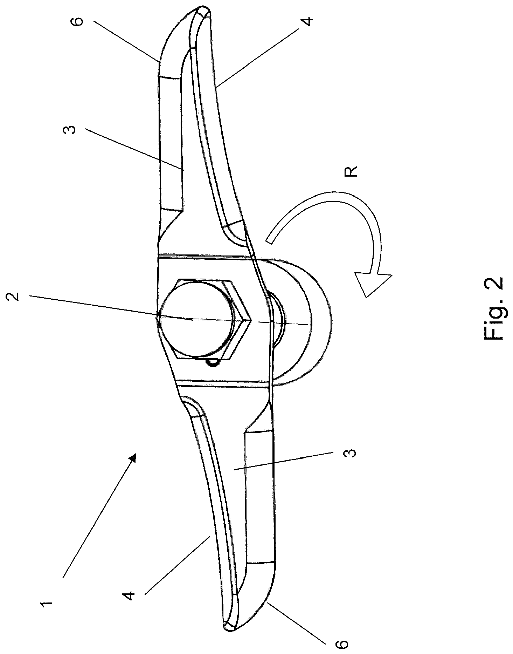

Figur 2 zeigt das Messer 1 aus Figur 1 in einer Draufsicht, wobei nur zwei Klingen 3 dargestellt sind. Die Klingen 3 sind auf der Welle 2 montiert. Die Klingen haben jeweils eine Schneidkante 4 und eine Folgekante 6. Die Schneidkante 4 befindet sich in Rotationsrichtung R vorne. Die Folgekante 6 ist länger als die Schneidkante 4. Des Weiteren weist die Folgekante 6 eine konvexe Krümmung, insbesondere in einem Bereich auf, der sich von der Welle 2 aus gesehen aussen befindet. Die Schneidkante 4 ist leicht konkav ausgebildet.

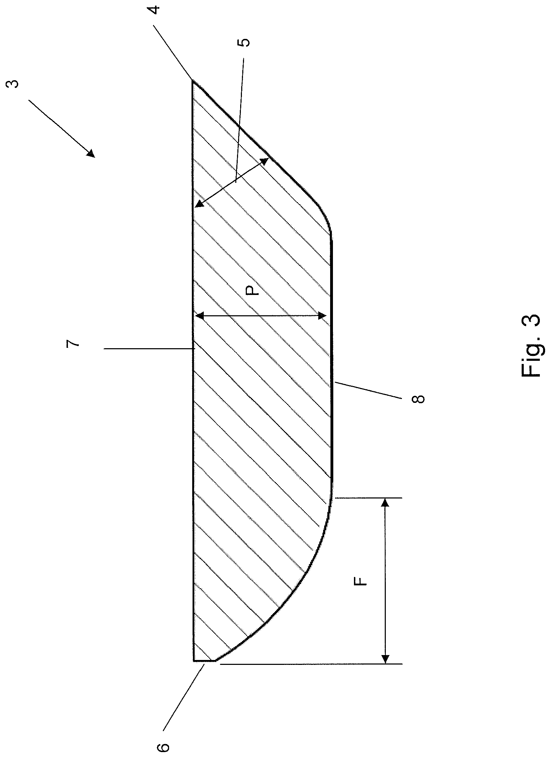

Figur 3 zeigt einen Querschnitt durch eine Klinge 3 eines Messers 1, wie in Figur 1 oder 2. Die Klinge 3 ist flügelprofilähnlich ausgestaltet. Die Klinge 3 weist eine Schneidkante 4 und eine Folgekante 6 auf. Die Kanten sind durch eine in der Figur untere Seite 7 und eine obere Seite 8 verbunden. Der Schneidwinkel 5 zwischen der unteren Seite 7 und der oberen Seite 8 an der Schneidkante 4 beträgt 45°. Dieser Schneidwinkelbereich erstreckt sich bis zur Profildicke P der Klinge 3. Der darauf folgende flussoptimierte Bereich F der oberen Seite 8 ist stetig abfallend bis zur Folgekante 6 ausgestaltet. Der flussoptimierte Bereich weist teilweise eine konvexe Form auf. Die untere Seite 7 ist im Schnitt als Gerade ausgestaltet. Es versteht sich von selbst, dass im bestimmungsgemässen Gebrauch die untere und obere Seite vertauscht sein können.

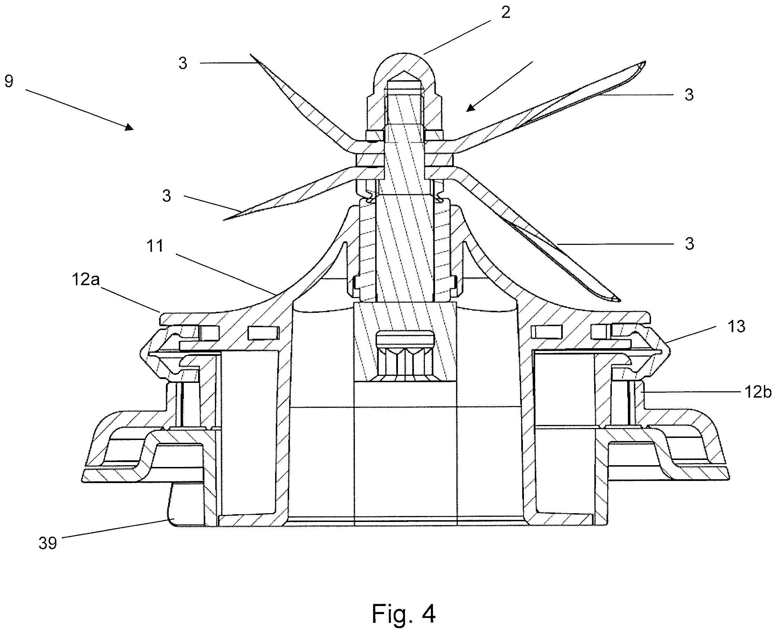

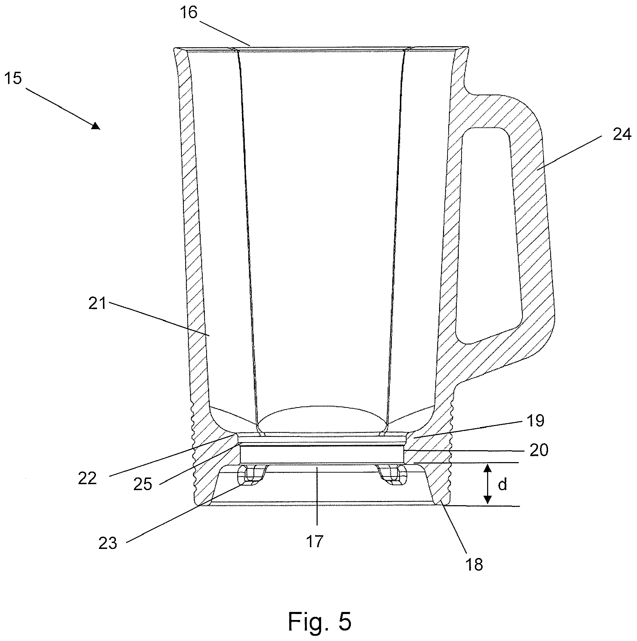

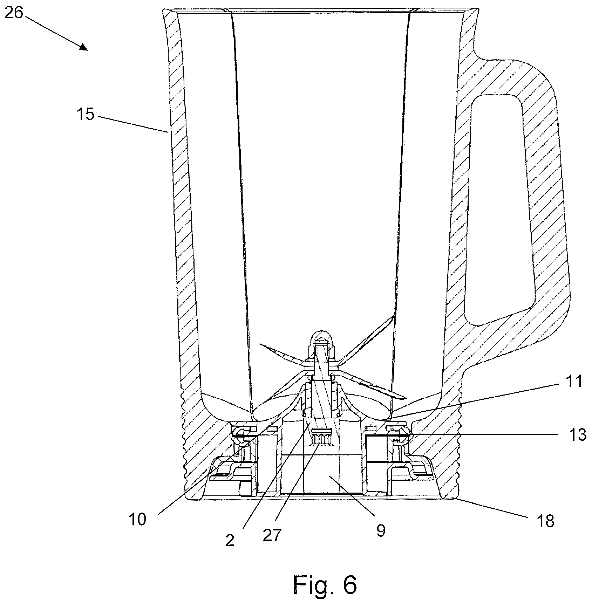

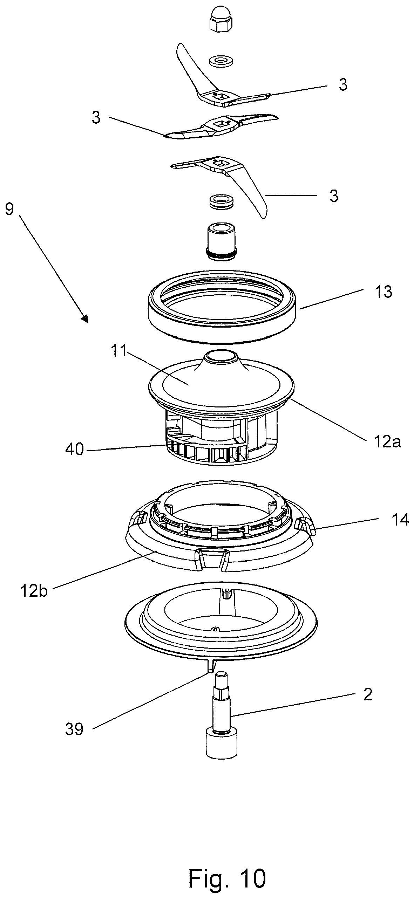

Figur 4 zeigt eine Ansicht einer erfindungsgemässen Messereinheit 9 zum Einsetzen in einen Körper 15 (siehe Figuren 5 und 6) eines Mixers. Die Messereinheit 9 weist ein Messer 1 gemäss Figur 1 mit einer Welle 2 und sechs Klingen 3 auf. Jede Klinge 3 definiert eine Schnittebene. Der Klingenwinkel 38 zwischen der Wellenachse 37 (siehe Figur 1) und der jeweiligen Klinge 3 ist jeweils unterschiedlich im Vergleich zu den anderen Klingen 3, so dass insgesamt sechs Schnittebenen entstehen. Unterhalb der Klingen ist die Welle 2 durch ein Gehäuse 10 abgedeckt. Das Gehäuse 10 weist eine Mantelfläche 11 auf. Die Mantelfläche 11 erstreckt sich ausgehend von der Welle 2 des Messers 1 in einem stetigen Verlauf radial nach aussen und verläuft so, dass die Mantelfläche 11 eine konkave Krümmung mit einem minimalen Radius im Schnitt von 0.3 mal die Länge des Messers 1 aufweist. Die Länge des Messers ist hierbei definiert als der Durchmesser des Kreises, der entsteht, wenn die längste Klinge 3 um die Welle 2 rotiert. Des Weiteren weist die Messereinheit 9 zwei Pressflächen 12a, 12b auf, welche gegeneinander verschiebbar ausgestaltet sind. Zwischen den Pressflächen 12a, 12b ist ein Dichtmittel 13 angeordnet. Beim Zusammenpressen der Pressflächen 12a, 12b in axialer Richtung wird das Dichtmittel 13 gequetscht und dehnt sich radial aus. Integriert in die untere Pressfläche 12b sind Ausnehmungen 14(siehe Figur 10) zur Aufnahme einer Einrastnocke 23 eines Körpers 15 (siehe Figur 5) eines Mixers. Die Ausnehmungen 14 (siehe Figur 10) können selbstverständlich auch unabhängig von der Pressfläche an der Messereinheit 9 ausgebildet sein. Das Verpressen des Dichtmittels 13 erfolgt durch ein bajonettartiges Gewinde im Inneren der Messereinheit 9. Ein bajonettartiges Gewinde hat den Vorteil eines definierten Anschlags, so dass der Anwender die sichere Verpressung der Messereinheit 9 im Körper 15 feststellen kann. Alternativ wäre auch ein Standardgewinde möglich. Es wird also eine rotatorische Bewegung des Anwenders in ein axiales Verpressen umgewandelt, was die Handhabung erleichtert, da der Kraftaufwand für den Nutzer geringer als bei einer direkten Verpressung ist. Der Anwender betätigt das bajonettartige Gewinde durch eine Griffplatte 39 (siehe Figur 10), während die Ausnehmungen 14 (siehe Figur 10) in Eingriff mit den Einrastnocken 23 des Körpers 15 (siehe Figur 5) stehen. Die Pressfläche 12a bewegt sich in Richtung Pressfläche 12b und das Dichtmittel 13 wird radial nach aussen gequetscht. Das Dichtmittel 13 ist als Gummidichtung ausgebildet und besteht aus Silikon. In seinem inneren Radius weist das Dichtmittel 13 eine Kerbe auf, so dass ein vordefinierter Knickbereich ausgebildet ist. Des Weiteren wird durch die Kerbe das Gummimaterial weniger beansprucht, so dass die Gummidichtung haltbarer ist. Nach dem radialen Ausquetschen des Dichtmittels 13 ist die Messereinheit 9 im Körper 15 fixiert und die Mantelfläche 11 bildet einen stetigen Übergang zum Körper 15 (siehe Figur 6).

In Figur 5 ist ein Körper 15 für einen Mixer in einem Querschnitt dargestellt. Der Körper 15 besteht aus Glas und weist eine obere Öffnung 16 zum Einfüllen von Mixgut sowie eine untere Öffnung 17 zur Aufnahme einer Messereinheit 9 (siehe Figur 4) auf. Des Weiteren weist der Körper 15 eine Standfläche 18 auf, auf der der Körper 15 sicher auf einer Arbeitsfläche abgestellt werden kann. Die untere Öffnung 17 ist durch eine umlaufende, radial nach innen vorstehende Kontur 19 gebildet, die eine Kontaktfläche 20 aufweist. An die Kontaktfläche 20 ist ein Dichtmittel 13 einer Messereinheit 9 (beides siehe Figur 4) zum dichten Verschliessen anpressbar. Die nach innen vorstehende Kontur 19 weist auf der Mixgutseite einen stetigen Übergang von einer im Wesentlichen vertikal verlaufenden Wand 21 des Körpers 15 zu einer in etwa horizontal verlaufenden Fläche 22 auf. Zwischen der nach innen vorstehenden Kontur 19 und der Standfläche 18 sind Einrastnocken 23 angeordnet, die mit Ausnehmungen 14 einer Messereinheit 9 (siehe Figur 4) korrespondieren. Die Einrastnocken 23 dienen einerseits als Verdrehsicherung und/oder als Orientierungshilfe für den Anwender, ob eine eingesetzte Messereinheit ausreichend fixiert ist. Zur einfacheren Handhabung weist der Körper 15 ausserdem einen Griff 24 auf. Die Distanz d zwischen nach innen vorstehender Kontur 19 und Standfläche 18 ist so ausgestaltet, dass der Körper 15 mit eingebauter Messereinheit 9 (siehe Figur 4) sicher stehen kann. Des Weiteren weist die nach innen vorstehende Kontur 19 eine Anschlagfläche 25 auf, deren Verlauf zumindest eine radiale Komponente aufweist. Eine solche Anschlagfläche 25 ermöglicht neben dem kraftschlüssigen Fixieren einer Messereinheit (siehe Figur 4) in dem Körper 15 eine zumindest teilweise formschlüssige Verbindung. Ebenso entsteht eine grössere Dichtfläche entsteht. Die Anschlagfläche 25 ist als Stufe in etwa mittig auf der Kontaktfläche 20 ausgebildet.

In Figur 6 ist ein Querschnitt durch einen Behälter 26 für einen Mixer dargestellt. Der Behälter 26 umfasst einen Körper 15, wie in Figur 5 beschrieben, sowie eine Messereinheit 9 mit einer Welle, wie in Figur 4 beschrieben. Die Pressflächen 12a, 12b (siehe Figur 4) haben das Dichtmittel 13 durch axiale Verpressung radial ausgedehnt, so dass das Dichtmittel 13 in reib- und formschlüssigem Kontakt mit der Kontaktfläche 20 und der Anschlagfläche 25 (siehe Figur 5) steht. Der Behälter 26 weist an der Messereinheit 9 ein Kupplungselement 27 zum Ankuppeln der Welle 2 an einen Antrieb auf. Der Verlauf der Mantelfläche 11 des Gehäuses 10 der Messereinheit 9 bildet einen stetigen Übergang mit der nach innen vorstehenden Kontur 19 (siehe Figur 5) des Körpers 15. Im Betrieb wird durch diese flussoptimierte Ausgestaltung eine gute Durchmischung des Mixguts erzielt.

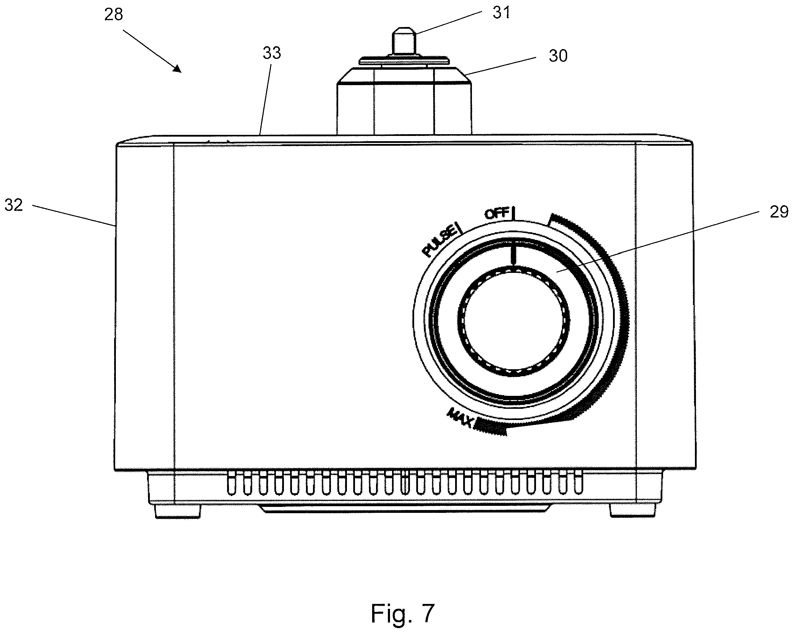

Figur 7 zeigt eine Ansicht einer Antriebseinheit 28. Die Antriebseinheit weist ein Schaltelement 29 zum Ein- und Ausschalten des Antriebs auf. Des Weiteren umfasst die Antriebseinheit 28 ein Kupplungsmittel 30 mit einer Welle 31 zum Ankuppeln eines Kupplungselements 27 einer Welle 2 einer Messereinheit 9 eines Behälters 26 (siehe Figur 6) und zum Übertragen eines Drehmoments. Die Antriebseinheit 28 weist ausserdem ein Gehäuse 32 mit einer Gehäuseoberfläche 33 auf. Die Gehäuseoberfläche 33 ist senkrecht zur Welle 31 sowie in etwa flach ausgebildet.

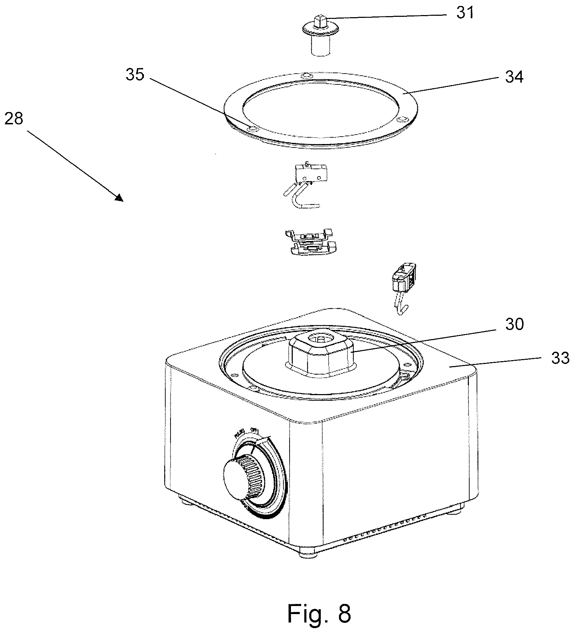

In Figur 8 ist die Antriebseinheit 28 aus Figur 7 in einer perspektivischen Ansicht dargestellt. Das Gehäuse besteht aus Zinkdruckguss. Möglich wäre selbstverständlich auch Aluminiumdruckguss, Stahldruckguss oder Kunststoffspritzguss. Die Gehäuseoberfläche 33 weist eine Standfläche 34 auf, deren Grösse und Form an eine Standfläche 18 eines Behälters 26 (beides siehe Figur 6) angepasst ist. Die Standfläche 34 ist durch ein Einlegeelement gebildet, das mehrschichtig ausgebildet ist. Die sichtbare, äussere Schicht der Standfläche 34 besteht aus TPE Zur Verbesserung der Steifigkeit ist im Inneren des Einlegelements eine Schicht aus ABS/PC angeordnet. Des Weiteren weist die Standfläche 34 Noppen 35 auf, unter denen Sicherheitselemente zur Detektion der Anwesenheit eines Behälters 26 (siehe Figur 6) angeordnet sind. Die Standfläche 34 ist als Einlegering ausgebildet. Der Einlegering besteht aus zwei Komponenten, einer inneren härteren Komponente aus ABS/PC und eine äusseren Komponente aus TPE Im Bereich der Noppen 35 ist nur die äussere Komponente angeordnet, damit die Sicherheitselemente unter den Noppen 35 ausgelöst werden können. Der Einlegerring wird in einer vorgesehenen Nut in der Gehäuseoberfläche 33 eingeschnappt, so dass eine flache Oberfläche entsteht, die leicht zu reinigen ist. Die Sicherheitselemente sind als Mikroschalter ausgeführt. In die Nut sind drei Mikroschalter in einen Mikroschalterclip eingeschnappt. Darauf folgend wird das Einlegeelement so in der Nut positioniert, dass die Noppen des Einlegeelements oberhalb der Mikroschalter angeordnet sind. Die Mikroschalter weisen einen Schaltweg von 0.9 mm und eine Schaltkraft von 250 cN auf. Die Mikroschalter bewirken den Unterbruch des Hauptstromkreises zwischen der Netzzuleitung und dem Antrieb, sobald der Körper angehoben wird und der Schalter somit betätigt wird. Die Gehäuseoberfläche 33 ist im Bereich ausserhalb der Standfläche 34 leicht erhaben, wobei die Stufe so ausgestaltet ist, dass sich innerhalb der Stufe kein Schmutz und/oder verschüttetes Mixgut ansammeln kann, sondern nur in der vordefinierten geringen Vertiefung, so dass die Gehäuseoberfläche leicht zu reinigen ist. Insbesondere weist die Gehäuseoberfläche 33 keine scharfen Ritzen, Rillen oder Kanten auf.

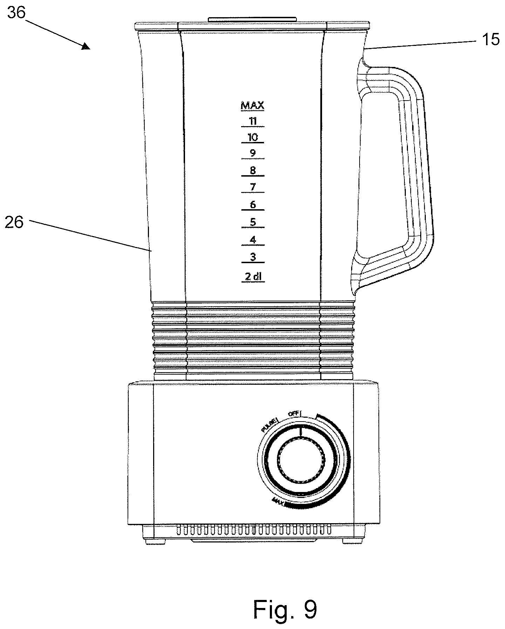

Figur 9 zeigt eine perspektivische Ansicht eines erfindungsgemässen Standmixers 36, der eine Behälter 26 gemäss Figur 6 bzw. einen Körper 15 gemäss Figur 5 und eine Messereinheit 9, wie in Figur 4 beschrieben und eine Antriebseinheit gemäss Figur 8 umfasst. Der Behälter 26 ist ohne Verriegelung auf der Standfläche 34 der Antriebseinheit 28 abgestellt und wird dort einzig durch sein Eigengewicht bzw. durch den Eingriff des Kupplungsmittels 30 (siehe Figur 8) in die Messereinheit 9 (siehe Figur 6) festgehalten.

Figur 10 zeigt eine Explosionszeichnung einer erfindungsgemässen Messereinheit 9 zum Einsetzen in einen Körper 15 (siehe Figuren 5 und 6). Die Messereinheit 9 weist eine Welle 2 sowie sechs Klingen 3 auf. Die Mantelfläche 11 der Messereinheit 9 verläuft stetig, konkav mit einem Radius von 0.3 x Messerlänge (Messerlänge entspricht einem Messer mit zwei Klingen). Der horizontal verlaufende Bereich der Mantelfläche 9 ist gleichzeitig als Pressfläche 12a für das Dichtmittel 13 ausgebildet. Das Dichtmittel 13 wird zwischen den Pressflächen 12a und 12b axial verpresst und dehnt sich radial aus. Integriert in die Pressfläche 12b sind Ausnehmungen 14 zur Aufnahme einer Einrastnocke 23 eines Körpers 15 (siehe Figur 5). Das Verpressen der Pressflächen 12a und 12b erfolgt durch den Nutzer, der eine rotatorische Bewegung mittels der Griffplatte 39 um die Welle 2 aufbringt. Mit Hilfe eines Bajonettgewindes wird die rotatorische Bewegung in ein axiales Verpressen des Dichtmittels 13 umgewandelt. Die für den Bajonettverschluss notwendige Schrägfläche (40) ermöglicht hierbei die Umwandlung der rotatorischen Bewegung in eine axiale Verpressung.

## Patentansprüche

1. Messereinheit (9) zum Einsetzen in einen Körper eines Mixers umfassend ein Messer (1) mit mehreren Klingen (3) und einer Welle (2), wobei die Klingen (3) mit der Welle (2) in Wirkverbindung stehen, ein Gehäuse (10) zum Abdecken der Welle (2) des Messers (1), Dichtmittel (13) zum dichten Verschliessen einer Öffnung eines Körpers eines Mixers, **dadurch gekennzeichnet, dass** die Messereinheit (9) zwei Pressflächen (12a, 12b) aufweist, welche gegeneinander verschiebbar sind und das Dichtmittel (13) so zwischen den Pressflächen (12a, 12b) angeordnet ist, dass beim Zusammenpressen der Pressflächen (12a, 12b) sich das Dichtmittel (13) radial ausdehnt.

2. Messereinheit (9) nach Anspruch 1, **dadurch gekennzeichnet, dass** die Pressflächen (12a, 12b) in etwa senkrecht zur Wellenachse (37) angeordnet sind.

3. Messereinheit (9) nach einem der Ansprüche 1 oder 2, **dadurch gekennzeichnet, dass** das Dichtmittel (13) auf einer Innenseite eine Kerbe aufweist.

4. Messereinheit (9), gemäss einem der Ansprüche 1 bis 3, umfassen ein Messer (1) mit mehreren Klingen (3) und einer Welle (2), 3 wobei die Klingen (3) in Wirkverbindung mit der Welle (2) stehen, einem Gehäuse (10) zum Abdecken der mechanischen Welle (2) des Messers (1), wobei sich das Gehäuse (10) ausgehend von der Welle (2) des Messers (1) radial nach aussen erstreckt, **dadurch gekennzeichnet, dass** eine Mantelfläche (11) des Gehäuses (10) so verläuft, dass die Mantelfläche (11) eine konkave Krümmung aufweist mit einem minimalen Radius von 0.1-10 mal die Länge des Messers, bevorzugt 0.2-5 mal die Länge des Messers und insbesondere bevorzugt 0.3 mal die Länge des Messers.

5. Standmixer (36) umfassend wenigstens eines der folgenden Merkmale:
eine Messereinheit (9) gemäss einem der Ansprüche 1 bis 4.

## Claims

1. Knife unit (9) for insertion into a body of a blender, comprising a knife (1) having a plurality of blades (3) and a shaft (2), the blades (3) being operatively connected to the shaft (2), a housing (10) for covering the shaft (2) of the knife (1), sealing means (13) for the leak-proof closure of an opening of the body of a blender, **characterized in that** the knife unit (9) has two pressing surfaces (12a, 12b), which can be displaced relative to each other, and the sealing means (13) is arranged between the pressing surfaces (12a, 12b) such that when the pressing surfaces (12a, 12b) are pressed together, the sealing means (13) expands radially.

2. Knife unit (9) according to Claim 1, **characterized in that** the pressing surfaces (12a, 12b) are arranged approximately perpendicular to the shaft axis (37).

3. Knife unit (9) according to either of Claims 1 and 2, **characterized in that** the sealing means (13) has a notch on an inner side.

4. Knife unit (9) according to one of Claims 1 to 3, comprising a knife (1) having a plurality of blades (3) and a shaft (2), the blades (3) being operatively connected to the shaft (2), a housing (10) for covering the mechanical shaft (2) of the knife (1), the housing (10) extending radially outwards, starting from the shaft (2) of the knife (1), **characterized in that** a lateral surface (11) of the housing (10) extends such that the lateral surface (11) has a concave curvature with a minimum radius of 0.1-10 times the length of the knife, preferably 0.2-5 times the length of the knife, and in particular preferably 0.3 times the length of the knife.

5. Blender (36) comprising at least one of the following features:
a knife unit (9) according to one of Claims 1 to 4.

## Revendications

1. Unité de couteau (9) destinée à être insérée dans un corps d'un mélangeur, comprenant
un couteau (1) doté de plusieurs lames (3) et d'un arbre (2), les lames (3) étant en liaison fonctionnelle avec l'arbre (2),
un boîtier (10) destinée à recouvrir l'arbre (2) du couteau (1),
des moyens d'étanchéité (13) destinés à fermer hermétiquement une ouverture d'un corps d'un mélangeur, **caractérisée en ce que**
l'unité de couteau (9) présente deux surfaces de poussée (12a, 12b) aptes à coulisser l'une par rapport à l'autre et
le moyen d'étanchéité (13) est disposé entre les deux surfaces de poussée (12a, 12b) de telle sorte que le moyen d'étanchéité (13) se dilate radialement lorsque les surfaces de poussée (12a, 12b) sont pressées l'une contre l'autre.

2. Unité de couteau (9) selon la revendication 1, **caractérisée en ce que** les surfaces de poussée (12a, 12b) sont disposées approximativement perpendiculairement à l'axe (37) de l'arbre.

3. Unité de couteau (9) selon l'une des revendications 1 ou 2, **caractérisée en ce que** le moyen d'étanchéité (13) présente une entaille sur une face intérieure.

4. Unité de couteau (9) selon l'une des revendications 1 à 3, comprenant
un couteau (1) doté de plusieurs lames (3) et d'un arbre (2), 3 les lames (3) étant en liaison fonctionnelle avec l'arbre (2),
un boîtier (10) destiné à recouvrir l'arbre (2) mécanique du couteau (1), le boîtier (10) s'étendant radialement vers l'extérieur à partir de l'arbre (2) du couteau (1), car
actérisée en ce que
une surface d'enveloppe (11) du boîtier (10) s'étend de telle sorte que la surface d'enveloppe (11) présente une courbure concave dont le rayon minimal représente de 0,1 à 10 fois la longueur du couteau, de préférence de 0,2 à 5 fois la longueur du couteau et de façon particulièrement préférable 0,3 fois la longueur du couteau.

5. Mélangeur (36) à poser comprenant au moins l'une des caractéristiques suivantes : une unité de couteau (9) selon l'une des revendications 1 à 4.
